# EUROPÄISCHE PATENTSCHRIFT

(11) **EP 1 184 266 B1**
(45) Veröffentlichungstag und Bekanntmachung des Hinweises auf die Patenterteilung: **02.08.2006**
(21) Anmeldenummer: 01114442.5
(22) Anmeldetag: 15.06.2001
(51) Int. Cl.: B62D 25/04, B62D 27/02

(54) **Aufbau für ein Kraftfahrzeug**
Body for motor-vehicle
Carrosserie pour un véhicule à moteur

(30) Priorität: 30.08.2000 DE 10042409
(43) Veröffentlichungstag der Anmeldung: 06.03.2002
(73) Patentinhaber: Dr.Ing. h.c.F. Porsche Aktiengesellschaft, 70435 Stuttgart (DE)
(72) Erfinder: Achleitner, August, 71263 Weil der Stadt (DE)

(56) Entgegenhaltungen:
- US-A- 3 944 278
- US-A- 5 395 153
- US-A- 5 806 917
- PATENT ABSTRACTS OF JAPAN vol. 1999, no. 08, 30. Juni 1999 (1999-06-30) & JP 11 059182 A (NISSAN MOTOR CO LTD), 2. März 1999 (1999-03-02)

## Beschreibung

Die Erfindung bezieht sich auf einen Aufbau für ein Kraftfahrzeug, insbesondere einen Personenwagen nach dem Oberbegriff des Patentanspruchs 1.

Ein bekannter Aufbau - DE-OS 2 223 880 - ist eine geschlossene Konstruktion, d.h. seine Rahmenstruktur umfasst Längsträger zwischen gegenüberliegenden und hintereinanderliegenden Rädern und eine den Aufbau versteifende Dacheinheit. An den Längsseiten des Aufbaus sind Türen vorgesehen, die mit Längsrahmenteilen verstärkt sind; letztere sind zwischen energieabsorbierenden Trägern im Bug und Heck der Rahmenstruktur angeordnet. Dieser Ausführung haftet der Nachteil an, dass zwischen diesen Trägern und Längsrahmenteilen keine Vorkehrungen getroffen sind, um die bei einer Havarie auftretenden Kräfte wirkungsvoll zu übertragen.

In der EP 0 987 169 A2 wird eine vordere Struktur eines Fahrzeugaufbaus behandelt, die Querträger, vordere Säulen und Längsträger aufweist. Über die Längsträger der vorderen Struktur werden Stoßkräfte vor allem vermittels Dachrahmenträger und bodennaher Längsträger in den Aufbau eingeleitet, und zwar ohne Unterstützung der Türen bzw. darin integrierter Längsrahmenteile.

Aus der gattungsbildenden US-A-5806917 geht ein Aufbau für ein Kraftfahrzeug, insbesondere einen Personenwagen mit versteifenden Längsrahmenteilen versehenen seitlichen Türen und einer Energie aufnehmenden Rahmenstruktur, die Querträger und zwischen gegenüberliegenden Rädern verlaufende vordere sowie hintere Längsträger und zwischen hintereinanderliegenden Rädern sich erstreckende Längsträger aufweist, hervor, wobei in die Rahmenstruktur als Scharniersäulen ausgebildete A-Säulen und als Schlosssäulen ausgebildete B-Säulen integriert sind und jede Tür mit dem Längsrahmenteil unter Vermittlung von Formschluss bewirkender Übertragungseinrichtungen mit der aus den Längsträgern, den Querträgern (vorderer Fahrgastzellenquerträger), hinterer Fahrgastzellenquerträger und der A-Säule sowie der B-Säule bestehenden Rahmenstruktur zusammenwirkt, dergestalt, dass die Übertragungseinrichtungen in Fahrzeuglängsrichtung und in Fahrzeugquerrichtung auf die Rahmenstruktur einwirkende Kräfte aufnehmen und weiterleiten, wobei eine erste Übertragungseinrichtung im Bereich der A-Säule und eine zweite Übertragungseinrichtung im Bereich der B-Säule vorgesehen sind.

Die US-A-5395153 zeigt eine Seitenwandkonstruktion für ein Kraftfahrzeug, wobei die Seitenwandkonstruktion Ausschnitte für seitliche Türen, einen untenliegenden Schwellerbereich, eine als Scharniersäule ausgebildete A-Säule und eine als Schlosssäule ausgebildete B-Säule umfasst.

Um bei einer Fahrzeugkollision bzw. bei einem Seitenaufprall mehr Energie mittels der Seitenwandkonstruktion aufnehmen zu können, wirken die mit versteifenden Längsrahmenteilen versehenen seitlichen Türen im Bereich der A-Säule, des Schwellers und der B-Säule formschlüssig mit der Rahmenstruktur der Seitenwandkonstruktion zusammen. Profilierte Anformungen der Rahmenstruktur greifen bei geschlossener seitlicher Tür in korrespondierende Aufnahmen der Tür ein.

Es ist Aufgabe der Erfindung einen Aufbau für ein Kraftfahrzeug, insbesondere einen Personenwagen zu schaffen, dessen Rahmenstruktur in der Weise ausgebildet ist, dass unter auf den Aufbau einwirkender Stossbelastung ein gezielter Kraftfluss über die Längs- und Querträger, Säulen sowie Türen bzw. deren Längsrahmenteile erfolgt.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass jede Tür mit dem Längsrahmenteil über die Übertragungseinrichtungen mit der Rahmenstruktur in der Weise zusammenwirkt, dass der Stosskraftfluss in besagter Rahmenstruktur, verursacht durch einen Unfall, optimiert wird, und zwar in Fahrzeuglängsrichtung und in Fahrzeugquerrichtung. Dabei stellt die Lage des Längsrahmenteils der Tür oberhalb des zwischen den hintereinanderliegenden Rädern verlaufenden Längsträgers sicher, dass unfallbedingte Stosskraftmomente wirkungsvoll abgestützt und Eindringvorgänge von Aufbaukomponenten in den Fahrgastraum, die Insassen gefährden können, deutlich reduziert werden. Diese Anordnung ist auch für Aufbauten von sogenannten offenen Personenwagen oder Sportwagen geeignet, bei denen keine mittragende Dachrahmenstruktur vorgesehen ist. Bei Aufbauten, die eine Dachrahmenstruktur dieser Art aufweisen kann besagte Anordnung dazu beitragen, dass Dachrahmen und Längsträger leichtgewichtiger konstruierbar sind. Schließlich sind die Übertragungseinrichtungen einfach zu realisieren und können bei der Konzeption eines Aufbaus bzw. einer Rahmenstruktur leicht berücksichtigt werden.

In der Zeichnung wird ein Ausführungsbeispiel der Erfindung gezeigt, das nachstehend näher beschrieben wird.

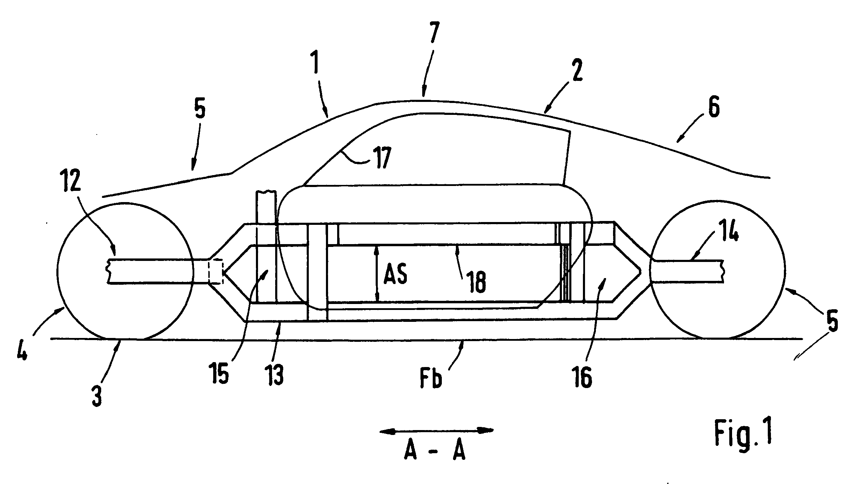

Es zeigen
- Fig. 1: eine schematische Seitenansicht eines Personenwagens mit dem Aufbau nach der Erfindung,
- Fig. 2: eine Ansicht von oben auf den Personenwagen der Fig.1 in größerem Maßstab,
- Fig. 3: eine Schrägansicht vom Fahrgastraum aus des Personenwagens auf eine Türe.

Ein Personenwagen 1 umfasst einen Aufbau 2, der von gegenüberliegenden Rädern 3 im Bug 4 und gegenüberliegenden Rädern 5 im Heck 6 getragen wird. Eine Außenhaut 7 umgibt eine Rahmenstruktur 8 des Aufbaus 2, die einen vorderen Querträger 9, einen vorderen Fahrgastzellenquerträger 10 und einen hinteren Fahrgastzellenquerträger 11 sowie vordere, mittlere und hintere Längsträger 12,13 und 14 aufweist. Die vorderen Längsträger 12 und die hinteren Längsträger 14 erstrecken sich zwischen den gegenüberliegenden Räder 3 bzw. 5, wogegen die mittleren Längsträger 14 zwischen den hintereinanderliegenden Räder 3 und 5 verlaufen. Darüber hinaus sind an Längsseiten der Rahmenstruktur 8 in diese integrierte Scharniersäulen und Schlosssäulen angebracht, die nachstehend als A-Säulen 15 und B-Säulen 16 bezeichnet sind. An jede A-Säule 15 bzw. Säule 16 ist eine Tür 17 angegliedert, die mit einem in etwa horizontal ausgerichteten Längsrahmenteil 18 versteift und um ein außerhalb der A-Säule 15 liegendes Scharnier 19 verschwenkbar ist, wobei das Längsrahmenteil 18 mit Abstand As zum mittleren Längsträger 13 verläuft, der sich wiederum benachbart zur Fahrbahn Fb erstreckt.

Das Längsrahmenteil 18 der Tür 17 arbeitet unter Vermittlung von Formschluss bewirkenden ersten und zweiten Übertragungseinrichtungen 20 und 21 mit der A-Säule 15 und der B-Säule 16 bzw. der aus letzteren und den Längsträgern 12,13 und 14 sowie Querträger 9 und Fahrgastzellenquerträgern 10,11 bestehenden Rahmenstruktur 8 zusammen. Dabei sind die erste Übertragungseinrichtung 20 und die zweite Übertragungseinrichtung 21 in der Weise ausgebildet, dass sie die in Fahrzeuglängsrichtung A-A und in Fahrzeugquerrichtung B-B wirkenden Kräfte, wie sie z.B. bei einer unfallbedingten Havarie auftreten, aufnehmen und weiterleiten. Eine vorteilhafte Konstruktion wird erreicht, wenn die erste Übertragungseinrichtung 20 im Bereich der A-Säule 15 und die zweite Übertragungseinrichtung 21 im Bereich der B-Säule 16 angeordnet ist. Außerdem sind die Übertragungseinrichtungen 20 und 21 mit ineinandergreifenden Abschnitten 22,23 bzw. 24,25 versehen.

Die erste Übertragungseinrichtung 20 wird durch einen ersten hutförmigen Querschnittsabschnitt 25 und einen zweiten hutförmigen Querschnittsabschnitt 26 gebildet, deren Ränder 27,28 in Fahrzeuglängsrichtung A-A ausgerichtet sind. Der erste Querschnittsabschnitt 25 ist eine Ausformung 29 der Rahmenstruktur 8 bzw. der A-Säule 15 und der zweite Querschnittsabschnitt 26 ist eine Einformung 30 in der Tür 17 bzw. dem Längsrahmenteil 18.

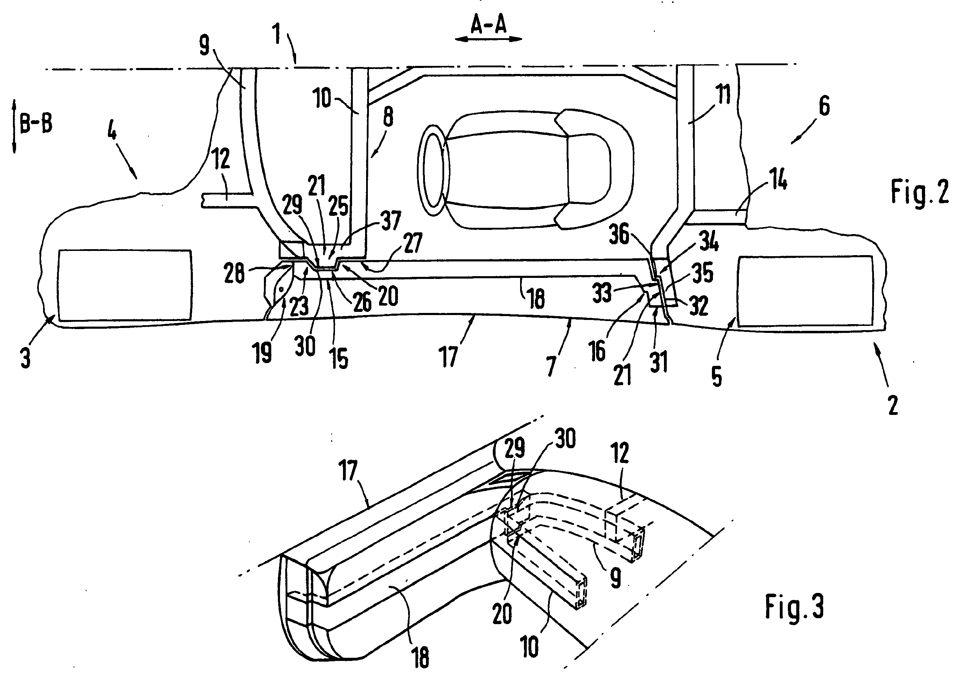

Denkbar ist aber auch die Ausformung 29 an der Tür 17 und die Einformung 30 an der Rahmenstruktur 8 vorzusehen -Fig. 3-.

Die zweite Übertragungseinrichtung 21 umfasst eine erste Rahmenstütze 31 an der Tür 17 und eine zweite Rahmenstütze 32 an der Rahmenstruktur 8 bzw. am hinteren Fahrgastzellenquerträger 11, die in Fahrzeugquerrichtung B-B verlaufen. Die Rahmenstützen 31,32 weisen Begrenzungen 33,34 auf, die mit ersten in Fahrzeuglängsrichtung A-A und zweiten in Fahrzeugquerrichtung B-B wirkenden Anschlägen 35 bzw. 36 versehen sind.

Die Rahmenstruktur 8 ist im Bereich der A-Säule 15 derart ausgebildet, dass ein seitlicher in Fahrzeuglängsrichtung A-A ausgerichteter Rahmenabschnitt 37 mit dem vorderen in Fahrtrichtung C gewölbten Querträger 9 und dem vorderen Fahrgastzellenquerträger 10 verbunden ist. Die Tür 17 bzw. das Längsrahmenteil 18 ist seitlich an den Rahmenabschnitt 37 herangeführt. An den vorderen Querträger 9 sind die Längsträger 12 angeschlossen, die von der Seite gesehen etwa in einer Mittellängsebene D-D zwischen den mittleren Längsträgern 13 und den Längsrahmenteilen 18 verlaufen.

## Patentansprüche

1. Aufbau (2) für ein Kraftfahrzeug, insbesondere einen Personenwagen (1) mit versteifenden Längsrahmenteilen (18) versehenen seitlichen Türen (17) und einer Energie aufnehmenden Rahmenstruktur (8), die Querträger und zwischen gegenüberliegenden Rädern (3, 5) verlaufende vordere sowie hintere Längsträger (12, 14) und zwischen hintereinanderliegenden Rädern (3, 5) sich erstreckende Längsträger (13) aufweist, wobei in die Rahmenstruktur (8) als Scharniersäulen ausgebildete A-Säulen (15) und als Schlosssäulen ausgebildete B-Säulen (16) integriert sind und jede Tür (17) mit dem Längsrahmenteil (18) unter Vermittlung von Formschluss bewirkender Übertragungseinrichtungen (20, 21) mit der aus den Längsträgern (12, 13, 14), den Querträgern (9) vorderer Fahrgastzellenquerträger (10), hinterer Fahrgastzellenquerträger (11) und der A-Säule (15) sowie der B-Säule (16) bestehenden Rahmenstruktur (8) zusammenwirkt, dergestalt, dass die Übertragungseinrichtungen (20, 21) in Fahrzeuglängsrichtung (A-A) und in Fahrzeugquerrichtung (B-B) auf die Rahmenstruktur (8) einwirkende Kräfte aufnehmen und weiterleiten, wobei eine erste Übertragungseinrichtung (20) im Bereich der A-Säule (15) und eine zweite Übertragungseinrichtung (21) im Bereich der B-Säule (16) vorgesehen sind, **dadurch gekennzeichnet, dass** die erste Übertragungseinrichtung (20) einen ersten hutförmigen Querschnittsabschnitt (26) und einen zweiten hutförmigen Querschnittsabschnitt (27) aufweist, deren Ränder (28, 29) in Fahrzeuglängsrichtung (A-A) ausgerichtet sind, wobei der erste Querschnittsabschnitt (26) eine Ausformung (28) an der Rahmenstruktur (8) und der zweite Querschnittsabschnitt (27) eine Einformung (30) an der Tür (17) ist und dass die zweite Übertragungseinrichtung (21) eine erste Rahmenstütze (31) und eine zweite Rahmenstütze (32) aufweist, die in Fahrzeugquerrichtung (A-A) verlaufen, wobei die einander zugekehrten Begrenzungen (33, 34) der Rahmenstützen (31, 32) in Fahrzeuglängsrichtung (A-A) und Fahrzeugquerrichtung (B-B) wirkende Anschläge (35 und 36) aufweisen.

2. Aufbau nach Anspruch 1, **dadurch gekennzeichnet, dass** ein pro Längsseite des Aufbaus (2) zwischen den hintereinanderliegenden Rädern (3, 4) verlaufender Längsträger (13) benachbart zur Fahrbahn (Fb) verläuft und das Längsrahmenteil (18) mit Abstand (As) zum Längsträger (13) in die Tür (17) integriert ist.

3. Aufbau nach Anspruch 1, **dadurch gekennzeichnet, dass** jede Übertragungseinrichtung (20, 21) ineinandergreifende Abschnitte (22, 23 und 24, 25) aufweist.

4. Aufbau nach einem oder mehreren der vorangehenden Ansprüche **dadurch gekennzeichnet, dass** die Rahmenstruktur (8) im Bereich der A-Säule (15) mit einem vorderen Querträger (9) und einem hierzu mit Abstand angeordneten vorderen Fahrgastzellenquerträger (10) ausgestattet und an seitliche in Fahrzeuglängsrichtung (A-A) ausgerichtete Rahmenabschnitte (37) herangeführt sind.

5. Aufbau nach Anspruch 4, **dadurch gekennzeichnet, dass** an den jeweiligen Rahmenabschnitt (37) die Tür (17) seitlich anschließt und zwischen Rahmenabschnitt (37) und Tür (17) die erste Übertragungseinrichtung (20) vorgesehen ist.

6. Aufbau nach Anspruch 1, **dadurch gekennzeichnet, dass** die Rahmenstruktur (8) einen hinteren Fahrgastzellenquerträger (11), vorzugsweise mit zwischen den Hinterrädern (5) verlaufenden hinteren Längsträgern (14) aufweist, wobei an dem hinteren Fahrgastzellenquerträger (11) die zweite Rahmenstütze (32) angebracht ist.

## Claims

1. A body (2) for a motor vehicle, especially a passenger vehicle (1), with side doors (17) provided with stiffening longitudinal frame parts (18), and with an energy-absorbing frame structure (8) which has transverse members and front and rear longitudinal members (12, 14) extending between wheels (3, 5) lying opposite one another and longitudinal members (13) extending between wheels (3, 5) lying one behind the other, wherein A-pillars (15) formed as hinge pillars and B-pillars (16) formed as lock pillars are integrated into the frame structure (8), and each door (17) with the longitudinal frame part (18) co-operates with the frame structure (8), comprising the longitudinal members (12, 13, 14), the transverse members (9), front passenger-cell transverse member (10), rear passenger-cell transverse member (11) and the A-pillar (15) and the B-pillar (16), by means of positive-locking transmission means (20, 21) in such a way that the transmission means (20, 21) absorb and transmit forces acting on the frame structure (8) in the longitudinal vehicle direction (A-A) and in the transverse vehicle direction (B-B), wherein a first transmission means (20) is provided in the region of the A-pillar (15) and a second transmission means (21) is provided in the region of the B-pillar (16), **characterised in that** the first transmission means (20) has a first hat-shaped cross-sectional portion (26) and a second hat-shaped cross-sectional portion (27), the edges (28, 29) of which are orientated in the longitudinal vehicle direction (A-A), wherein the first cross-sectional portion (26) is an elevation (28) on the frame structure (8) and the second cross-sectional portion (27) is an indentation (20) in the door (17), and **in that** the second transmission means (21) has a first frame support (31) and a second frame support (32) which extend in the transverse vehicle direction (A-A) [*sic* - B-B], wherein the facing boundaries (33, 34) of the frame supports (31, 32) have stops (35 and 36) acting in the longitudinal vehicle direction (A-A) and the transverse vehicle direction (B-B).

2. A body according to claim 1, **characterised in that** a longitudinal member (13), extending on each longitudinal side of the body (2) between the wheels (3, 4) lying one behind the other, extends adjacent to the roadway (Fb), and the longitudinal frame part (18) is integrated into the door (17) with spacing (As) from the longitudinal member (13).

3. A body according to claim 1, **characterised in that** each transmission means (20, 21) has mutually engaging portions (22, 23 and 24, 25).

4. A body according to one or more of the preceding claims, **characterised in that** the frame structure (8) is provided, in the region of the A-pillar (15), with a front transverse member (9) and a front passenger-cell transverse member (10) arranged with spacing therefrom which lead to lateral frame portions (37) orientated in the longitudinal vehicle direction (A-A).

5. A body according to claim 4, **characterised in that** the door (17) is laterally adjacent to the respective frame portion (37), and the first transmission means (20) is provided between the frame portion (37) and the door (17).

6. A body according to claim 1, **characterised in that** the frame structure (8) has a rear passenger-cell transverse member (11), preferably with rear longitudinal members (14) extending between the rear wheels (5), wherein the second frame support (32) is mounted on the rear passenger-cell transverse member (11).

## Revendications

1. Carrosserie (2) pour un véhicule automobile, en particulier une voiture de tourisme (1) avec des portes latérales (17) pourvues d'éléments longitudinaux de cadre (18) de raidissement et avec une structure de cadre (8) absorbant l'énergie qui comporte des traverses et des longerons (12, 14) avant et arrière s'étendant entre des roues (3, 5) opposées, ainsi que des longerons (13) s'étendant entre des roues (3, 5) situées l'une derrière l'autre, des montants A (15), réalisés sous la forme de montants à charnière, ainsi que des montants B (16), réalisés sous la forme de montants à serrure, étant intégrés dans la structure de cadre(8) et chaque porte (17) avec l'élément longitudinal de cadre (18) coopère, par l'intermédiaire de dispositifs de transmission (20, 21) provoquant une liaison par complémentarité de formes, avec la structure de cadre (8) constituée des longerons (12, 13, 14), des traverses (9) de poutres transversales avant (10) de l'habitacle, de poutres transversales arrière (11) de l'habitacle et du montant A (15) ainsi que du montant B, de manière que les dispositifs de transmission (20, 21) absorbent les forces agissant sur la structure de cadre (8) dans la direction longitudinale A-A et dans la direction transversale B-B du véhicule, et les transmettent, un premier dispositif de transmission (20) étant prévu dans la zone du montant A (15) et un deuxième dispositif de transmission (21) dans la zone du montant B (16), **caractérisée en ce que** le premier dispositif de transmission (20) comporte un premier segment de section transversale (26) en forme de chapeau et un deuxième segment de section transversale (27) en forme de chapeau dont les bords (28, 29) sont orientés dans la direction longitudinale A-A du véhicule, le premier segment de section transversale (26) étant un bossage (28) sur la structure de cadre (8) et le deuxième segment de section transversale (27) un renfoncement (30) sur la porte (17), et **en ce que** le deuxième dispositif de transmission (21) comporte un premier appui de cadre (31) et un deuxième appui de cadre (32) qui s'étendent dans la direction transversale B-B du véhicule, les délimitations (33, 34) tournées l'une vers l'autre des appuis de cadre (31, 32) comportant des butées (35 et 36) agissant dans la direction longitudinale A-A et la direction transversale B-B du véhicule.

2. Carrosserie selon la revendication 1, **caractérisée en ce qu'**un longeron (13) s'étendant pour chaque côté longitudinal de la carrosserie (2), entre les roues (3, 4) situées l'une derrière l'autre, s'étend au voisinage de la chaussée Fb et l'élément longitudinal de cadre (18) est intégré, à la distance As du longeron (13), dans la porte (17).

3. Carrosserie selon la revendication 1, **caractérisée en ce que** chaque dispositif de transmission (20, 21) comporte des segments (22, 23 et 24, 25) s'engageant les uns dans les autres.

4. Carrosserie selon une ou plusieurs des revendications précédentes, **caractérisée en ce que** la structure de cadre (8) est équipée, dans la zone du montant A (15) d'une traverse avant (9) et d'une poutre transversale avant (10) de l'habitacle disposée à distance de la première, et s'étend jusqu'à des segments de cadre (37) latéraux orientés dans la direction longitudinale A-A du véhicule.

5. Carrosserie selon la revendication 4, **caractérisée en ce que** la porte (17) se raccorde latéralement au segment de cadre (37) respectif et le premier dispositif de transmission (20) est prévu entre le segment de cadre (37) et la porte (17).

6. Carrosserie selon la revendication 1, **caractérisée en ce que** la structure de cadre (8) comporte une poutre transversale arrière (11) de l'habitacle, de préférence avec des longerons arrière (14) s'étendant entre les roues arrière (5), le deuxième appui de cadre (32) étant placé sur la poutre transversale arrière (11) de l'habitacle.
